# EUROPÄISCHE PATENTSCHRIFT

(11) **EP 2 176 320 B1**
(45) Veröffentlichungstag und Bekanntmachung des Hinweises auf die Patenterteilung: **14.09.2011**
(21) Anmeldenummer: 08786423.7
(22) Anmeldetag: 25.07.2008
(51) Int. Cl.: C08G 77/388

(54) **POLYHYDROXYAMIDOGRUPPEN AUFWEISENDE ORGANOPOLYSILOXANE UND DEREN HERSTELLUNG**
ORGANOPOLYSILOXANES HAVING POLYHYDROXYAMIDO GROUPS AND PREPARATION THEREOF
ORGANOPOLYSILOXANES PRÉSENTANT DES GROUPES POLYHYDROXYAMIDO ET LEUR UTILISATION

(30) Priorität: 08.08.2007 DE 102007037360
(43) Veröffentlichungstag der Anmeldung: 21.04.2010
(73) Patentinhaber: Wacker Chemie AG, 81737 München (DE)
(72) Erfinder: HERZIG, Christian, 83329 Waging (DE)
(74) Vertreter: Deffner-Lehner, Maria
(86) Internationale Anmeldenummer: PCT/EP2008/059762
(87) Internationale Veröffentlichungsnummer: WO 2009/019144

(56) Entgegenhaltungen:
- WO-A-2006/071772
- US-B2- 6 958 410

## Beschreibung

Die Erfindung betrifft Polyhydroxyamidogruppen aufweisende Organopolysiloxane und ein Verfahren zu ihrer Herstellung.

US 6,958,410 B2 beschreibt amidofunktionelle Aminopolydiorganosiloxane, die über die Amidofunktion Hydroxycarbonsäuren gebunden haben. Diese linearen Siloxane enthalten im Wesentlichen seitenständige Polyhydroxyamidoalkylgruppen. Sie werden als Weichmacher zur Textilausrüstung verwendet.

In EP 1081272 werden Polyol-funktionelle lineare Siloxane beschrieben, die zusätzlich Amino- und/oder Amidogruppen enthalten, wobei die Polyolgruppen ausschließlich seitenständig gebunden sind. Diese Stoffe werden als Textilfinish eingesetzt, um die Vergilbungsneigung bei der Verarbeitung im Vergleich zu herkömmlichen Weichmachern zu verringern.

Polyhydroxysiloxane sind aus US 4,591,652 bekannt. Ihre Synthese erfolgt durch Umsatz von Silanen, die aminterminierte Substituenten tragen, mit Aldonsäurelacton.

JP 62068820 A wiederum beschreibt allgemein die Synthese von Organopolysiloxanen mit Saccharidresten aus Aminosiloxanen und Saccharidlactonen. Sie werden als Primer auf mineralischen und metallischen Oberflächen verwendet.

In EP 879 840 A werden lineare Organopolysiloxane beansprucht, die im selben Molekül gleichzeitig Polyhydroxygruppen wie auch Polyethergruppen enthalten. Diese können jeweils in seiten- oder auch endständiger Position der Siloxankette gebunden sein.

WO 2006/071772 offenbart vernetzbare Saccharidsiloxanzusammensetzungen, sowie vernetzte Formulierungen, sowie daraus hergestellte Beschichtungen. Die in den Beispielen als Edukte verwendeten ω, α-Aminosiloxane sind zu 100 % mit Aminogruppen endgestoppert. Die damit erhaltenen polyhydroxy-funktionellen Saccharide-Siloxane sind fest oder haben wachsartige oder gummiartige Konsistenz.

Es bestand die Aufgabe, Polyhydroxyamidogruppen aufweisende Organopolysiloxane bereitzustellen, die Reste mit Hydroxygruppen, insbesondere Zuckerreste, enthalten und die fließfähig sind.
Die Aufgabe wird durch die Erfindung gelöst.

Gegenstand der Erfindung sind Polyhydroxyamidogruppen aufweisende Organopolysiloxane der allgemeinen Formel

AₓR₃₋ₓSiO(SiR₂O)ₘSiR_{3-y}A_{y} (I),

wobei
- A: einen einwertigen Rest der allgemeinen Formel

-R¹-N(R²)-Z (IIa) und/oder -R¹-NR³-R⁴-N(R²)-Z (IIb)
bedeutet,
- Z: ein einwertiger organischer Rest ist, der mit mindestens 2 Hydroxygruppen, vorzugsweise mit mindestens 3 Hydroxygruppen substituiert ist, bevorzugt ein Rest ist, der abgeleitet ist von Hydroxycarbonsäuren oder oxidierten Mono- oder Disacchariden, die mindestens 2 Hydroxygruppen, vorzugsweise mindestens 3 Hydroxygruppen, enthalten,
- R: einen einwertigen Kohlenwasserstoffrest mit 1 bis 18 C- Atomen bedeutet,
- R¹: einen zweiwertigen organischen Rest mit 1 bis 100 C-Atomen, der ein oder mehrere separate Sauerstoffatome enthalten kann, vorzugsweise einen zweiwertigen Kohlenwasserstoffrest mit 1 bis 18 C-Atomen, bedeutet,
- R²: ein Wasserstoffatom oder einen einwertigen Kohlenwasserstoffrest mit 1 bis 18 C-Atomen bedeutet,
- R³: ein Wasserstoffatom oder Z bedeutet,
- R⁴: ein zweiwertiger Kohlenwasserstoffrest mit 1 bis 6 Kohlen- stoffatomen bedeutet,
- m: eine ganze Zahl von 1 bis 500, bevorzugt 10 bis 100, ist,
- x: 0 oder 1 ist,
- y: 0 oder 1 ist,
mit der Maßgabe, dass die Summe x+y durchschnittlich 0,4 bis 1,8 ist und somit als Endgruppen durchschnittlich 20 bis 90 Mol-% Reste A vorliegen.

Gegenstand der Erfindung ist weiterhin ein Verfahren zur Herstellung der Polyhydroxyamidogruppen aufweisenden Organopolysiloxane indem
Aminogruppen aufweisende Organopolysiloxane (1) der allgemeinen Formel

BₓR₃₋ₓSiO(SiR₂O)ₘSiR_{3-y}B_{y} (III),

wobei
- B: einen einwertigen Rest der allgemeinen Formel

-R¹-NH(R²) (IVa) und/oder -R¹-NH-R⁴-NH(R²) (IVb)
bedeutet, und
R, R¹, R², R⁴, m, x und y die oben dafür angegebene Bedeutung haben,
mit der Maßgabe, dass die Summe x+y durchschnittlich 0,4 bis 1,8 ist und somit als Endgruppen durchschnittlich 20 bis 90 Mol-% Reste B vorliegen,
mit Lactonen (2) von Hydroxycarbonsäuren, die mindestens 2 Hydroxygruppen, vorzugsweise mindestens 3 Hydroxygruppen, enthalten,
umgesetzt werden.

Die erfindungsgemäßen Organopolysiloxane der Formel (I) weisen als Endgruppen durchschnittlich 20 bis 90 Mol-% Polyhydroxygruppen A auf, was einer durchschnittlichen Summe x+y in Formel (I) von 0,4 bis 1,8 entspricht.

Die erfindungsgemäßen Organopolysiloxane der Formel (I) weisen als Endgruppen vorzugsweise durchschnittlich 30 bis 80 Mol-% Polyhydroxygruppen A auf, was einer durchschnittlichen Summe x+y in Formel (I) von vorzugsweise 0,6 bis 1,6 entspricht.

Die erfindungsgemäßen Organopolysiloxane der Formel (I) weisen als Endgruppen bevorzugt durchschnittlich 35 bis 75 Mol-%, Polyhydroxygruppen A auf, was einer durchschnittlichen Summe x+y in Formel (I) von bevorzugt 0,7 bis 1,5 entspricht.

Die erfindungsgemäßen Organopolysiloxane der Formel (I) enthalten zwei Arten von endständigen Siloxaneinheiten, solche der Formel AR₂SiO_{1/2} (mit Polyhydroxygruppe) als auch solche der Formel R₃SiO_{1/2} (ohne Polyhydroxygruppe), wobei R bevorzugt ein Methylrest ist.

Die beim erfindungsgemäßen Verfahren eingesetzten Aminogruppen aufweisenden Organopolysiloxane (1) sind nicht zu 100 % mit Aminogruppen endgestoppert, wie die im Beispiel 1 a) bis c) der WO 2006/071772 A2 beschriebenen α,ω-Aminosiloxane.

Die eingesetzten Aminogruppen aufweisenden Organopolysiloxane (1) der Formel (III) weisen als Endgruppen durchschnittlich 20 bis 90 Mol-%, vorzugsweise 30 bis 80 Mol-%, bevorzugt 35 bis 75 Mol-%, Aminogruppen B auf, was einer durchschnittlichen Summe x+y in Formel (III) von 0,4 bis 1,8, vorzugsweise 0,6 bis 1,6, bevorzugt 0,7 bis 1,5, entspricht.

Die eingesetzten Organopolysiloxane der Formel (III) enthalten zwei Arten von endständigen Siloxaneinheiten, solche der Formel BR₂SiO_{1/2} (mit Aminogruppe) als auch solche der Formel R₃SiO_{1/2} (ohne Aminogruppe). Die zwei Arten von endständigen Siloxaneinheiten können statistisch verteilt sein oder in der Art verteilt sein, dass die Siloxankette der Formel (III) genau eine endständige Siloxaneinheit der Formel BR₂SiO_{1/2} und genau eine endständigen Siloxaneinheit der Formel R₃SiO_{1/2} enthält.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Bevorzugt bedeutet R¹ einen zweiwertigen Kohlenwasserstoffrest mit 2 bis 6 C-Atomen.

Vorzugsweise ist R⁴ ein Rest der Formel -(CH₂)ₖ-, wobei k eine ganze Zahl von 1 bis 6 ist, bevorzugt 2, 3, oder 4 ist.

Das Strukturelement Z in den Formeln (IIa) und (IIb) enthält vorzugsweise mindestens zwei Hydroxygruppen, die jeweils an verschiedene Kohlenstoffatome gebunden sind. Bevorzugt enthält Z 3 bis 12 C-Atome und 2 bis 10 Hydroxygruppen. Bevorzugt steht Z für einen organischen Rest mit 3 bis 12 C-Atomen, der sich von Hydroxycarbonsäuren oder oxidierten Mono- oder Disacchariden, die 2 bis 10 Hydroxygruppen enthalten, ableitet. Besonders bevorzugt steht Z für Reste, die sich von oxidierten Monosacchariden der Formeln

HOCH₂-(CHOH)_{d}-CO-

O=CH-(CHOH)_{d}-CO-

HO₂C-(CHOH)_{d}-CO-

ableiten, wobei d 2, 3, 4, 5, 6, 7, 8, 9 und 10 ist.

Diese Reste Z leiten sich von den ihnen zugrunde liegenden Carbonsäuren durch Abwesenheit der Hydroxygruppe des Carboxylteils ab, welche in diesen speziellen Fällen bei der Verknüpfung von Z mit dem N-Atom in Formel (IIa) bzw. (IIb) zu einem Amid mit einem Wasserstoffatom aus der Aminogruppe der Formeln (IVa) bzw. (IVb) formal ein Mol Kondensationswasser bildet.

Beispiele für den Resten Z zugrunde liegende Carbonsäuren sind die Glycerinsäure, Mevalonsäure, Gluconsäure, Mannonsäure, 2-Ketogulonsäure, Galactarsäure, Glucarsäure, sowie mit ihren cyclischen Strukturen die Glucuronsäure, Galacturonsäure und Chinasäure.

Die beim erfindungsgemäßen Verfahren eingesetzten Organopolysiloxane (1) enthalten als Reste B Aminogruppen mit jeweils mindestens einem Aktivwasserstoffatom pro Aminofunktion. Da primäre Aminogruppen schneller und vollständiger mit Lactonen (2) reagieren als sekundäre Aminogruppen, sind Reste B mit primären Aminogruppen bevorzugt.

Bevorzugte Beispiele für Reste B sind:

H₂N(CH₂)₃-

H₂NCH₂CH(CH₃)CH₂-

H₂N(CH₂)₂NH(CH₂)₃-

H₂N(CH₂)₂NHCH₂CH(CH₃)CH₂-

(Cyclohexyl)NH(CH₂)₃-

CH₃NH(CH₂)₃-

CH₃CH₂NH(CH₂)₃-

CH₃NH(CH₂)₂NH(CH₂)₃-

CH₃CH₂NH(CH₂)₂NH(CH₂)₃-

Bevorzugte Beispiele für endständige Siloxaneinheiten der Formel BR₂SiO_{1/2} sind
Aminopropyl-dimethylsiloxaneinheiten,
Aminoisobutyl-dimethylsiloxaneinheiten,
Aminoethylaminopropyl-dimethylsiloxaneinheiten und
Aminoethylaminoisobutyl-dimethylsiloxaneinheiten,

Beispiele für Aminogruppen aufweisende Organopolysiloxane (1) sind Copolymerisate aus Aminopropyl-dimethylsiloxan-, Trimethylsiloxan- und Dimethylsiloxaneinheiten, aus Aminoisobutyl-dimethylsiloxan-, Trimethylsiloxan- und Dimethylsiloxaneinheiten und aus Aminoethylaminopropyldimethylsiloxan-, Octyldimethylsiloxan- und
Dimethylsiloxaneinheiten.

Die Aminogruppen aufweisenden Organopolysiloxane (1) weisen eine Viskosität von vorzugsweise 10 bis 100000 mPa.s bei 25°C, bevorzugt 10 bis 10000 mPa.s bei 25°C, und eine Aminkonzentration von vorzugsweise 0,01 bis 2,0 mEqu./g, bevorzugt 0,1 bis 1,5 mEqu./g, auf.

Vorzugsweise werden Lactone (2) von Hydroxycarbonsäuren mit 3 bis 12 C-Atomen, die 2 bis 10 Hydroxygruppen enthalten, eingesetzt.

Beispiele für Lactone (2), die bei dem erfindungsgemäßen Verfahren eingesetzt werden, sind Glucarsäure-1,4-lacton, Glucono-1,5-lacton, Glucurono-6,3-lacton, Galactono-1,4-lacton, Mannonsäure-1,4-lacton, Gulonsäure-1,4-lacton, Ascorbinsäure und Glucoascorbinsäure.

Vorzugsweise wird bei dem erfindungsgemäßen Verfahren Lacton (2) in Mengen von 0,5 bis 1,2 Mol, bevorzugt 0,7 bis 1,0 Mol, je Mol primäre (und ggf. sekundäre) Aminogruppe in Organopolysiloxan (1) eingesetzt.

Die Umsetzung von Aminogruppen aufweisendem Organopolysiloxan (1) mit Lacton (2) wird vorzugsweise bei Temperaturen von 40 bis 100°C, bevorzugt 40 bis 70°C, durchgeführt. Die Umsetzung kann beim Druck der umgebenden Atmosphäre (ca. 1020 hPa) oder auch bei höheren oder niederen Drücken durchgeführt werden.

Die Umsetzung kann unverdünnt durchgeführt werden oder auch in Gegenwart von organischen Lösemitteln durchgeführt werden. Beispiele für organische Lösungsmittel sind Alkohole, wie Methanol, Ethanol, Dodecanol, Isotridecanol, 2-Ethylhexanol, und Guerbetalkohole wie 2-Butyloctanol, 2-Hexyloctanol, 2-Hexyldecanol, 2-Octyldecanol, 2-Hexyldodecanol oder 2-Octyldodecanol.

Vorzugsweise werden bei dem erfindungsgemäßen Verfahren organische Lösungsmittel mitverwendet. Bevorzugt wird eine 50 bis 80 Gew.-%-ige Lösung von Aminogruppen aufweisendem Organopolysiloxan (1) in dem Lösungsmittel eingesetzt.

Nach der Umsetzung kann das organische Lösungsmittel - vorzugsweise destillativ - entfernt werden. Wird mit einem Gemisch von Lösungsmitteln gearbeitet, bevorzugt mit einem Gemisch aus einem Tiefsieder (Lösungsmittel mit einem Siedepunkt von vorzugsweise unter 100°C, wie Ethanol) und einem Hochsieder (Lösungsmittel mit einem Siedepunkt von vorzugsweise über 150°C, wie Dodecanol oder Isotridecanol), wird bevorzugt der Tiefsieder entfernt und der Hochsieder als Viskositätsregler im erfindungsgemäßen Organopolysiloxan belassen.

Bei dem erfindungsgemäßen Verfahren erfolgt die Reaktion von primärer Aminogruppe mit der Lactongruppe spontan und benötigt meist keinen Katalysator.

Wird das organische Lösungsmittel nicht entfernt, werden Lösungen von erfindungsgemäßen Polyhydroxyamidogruppen aufweisenden Organopolysiloxane in organischen Lösungsmitteln erhalten, die vorzugsweise 50 bis 90 Gew.-% erfindungsgemäße Organopolysiloxane enthalten.

Durch Entfernen des Lösungsmittels werden bevorzugt hochkonzentrierte Lösungen von erfindungsgemäßen Polyhydroxyamidogruppen aufweisenden Organopolysiloxane in organischen Viskositätsreglern erhalten, die 70 bis 95 Gew. -% erfindungsgemäße Organopolysiloxane enthalten und trotzdem noch gut fließfähig sind. Diese hochkonzentrierten Lösungen mit 70 bis 95 Gew.-% erfindungsgemäßen Organopolysiloxanen weisen je nach Konzentration der Organopolysiloxane eine Viskosität von vorzugsweise 1000 bis 200000 mPa·s bei 25°C, bevorzugt 1000 bis 50000 mPa·s bei 25°C, auf.

### Beispiel 1:

300g eines linearen Organopolysiloxans aus
Aminopropyldimethylsiloxy-, Trimethylsiloxy- und Dimethylsiloxyeinheiten mit der Viskosität von 20,4 mm²/s (25°C) und einem Amingehalt von 0,704 m Equ./g (entsprechend 66 Mol-% Aminogruppen, Summe x+y = 1,32) werden mit 83,5 g Dodecanol und 37 g Ethanol verdünnt. Nach Erwärmen auf ca. 50°C werden 34 g Gluconolacton dazu gegeben, und weiter auf 80°C erwärmt. Nach ca. 3 Stunden klart die trübe Mischung auf. Man lässt noch weitere 3 Stunden ausreagieren. Die zunächst dünnflüssige Lösung wird beim Abkühlen zwar erheblich viskoser, ist aber bei 25°C noch flüssig. Die Polymerlösung hat nur noch einen Amingehalt von 0,051 m Equ./g.

### Beispiel 2:

300 g eines linearen Organopolysiloxans aus
Aminopropyldimethylsiloxy-, Trimethylsiloxy- und Dimethylsiloxyeinheiten mit einer Viskosität von 18,2 mm²/s (25°C) und einem Amingehalt von 0,550 m Equ./g (entsprechend 48 Mol-% Aminogruppen, Summe x+y = 0,96) werden mit 36,5 g Isotridecanol und 36,5 g Ethanol verdünnt und auf 50°C erwärmt. Anschließend werden 26,5 g Gluconolacton zugegeben, und der Ansatz auf 80°C erwärmt. Nach 105 Minuten wird der zunächst trübe Ansatz homogen. Nach weiteren 3 Stunden wird Ethanol im Vakuum entfernt. Die 90 %-ige Polyhydroxyamidosiloxanlösung ist in der Wärme noch dünnflüssig, wird beim Abkühlen erheblich viskoser, bleibt aber bei 25°C noch gut fließfähig. Der Gehalt an restlichen Amingruppen beträgt 0,041 m Equ./g.

### Vergleichsbeispiel 1 gemäß WO 2006/071772:

Beispiel 2 wird wiederholt, in dem 300 g eines linearen Organopolysiloxans aus Aminopropyldimethylsiloxy- und Dimethylsiloxyeinheiten (DMS-A21, Gelest Inc.) mit 0,65 % NH₂-Gehalt und 100 %-iger Aminendstopperung eingesetzt wird. Man rührt jeweils 36 g Ethanol und Isotridecanol ein und erwärmt auf 50°C. Nach Zugabe von 21,8 g Gluconolacton erwärmt man weiter auf 80°C und hält die Temperatur 5 Stunden lang. Die Entfernung von Ethanol im Vakuum liefert eine 90 %-ige Polyhydroxyamidosiloxanlösung, die sich beim Abkühlen stark verfestigt und bei 27°C eine wachsartige feste Masse bildet. Der Gehalt an restlichen Amingruppen beträgt 0,032 Equ./g.

Während das erfindungsgemäße Polyhydroxyamidogruppen aufweisende Organopolysiloxan eine gut fließfähige Flüssigkeit ist, ist das gemäß WO 2006/071772 erhaltene 100 %-ig endgestopperte Organopolysiloxan fest.

### Beispiel 3:

240 g eines linearen Organopolysiloxans aus
Aminoethylaminopropyl-dimethylsiloxy-, Trimethylsiloxy- und Dimethylsiloxyeinheiten mit einer Viskosität von 41,8 mm²/s (25°C) und einem Amingehalt von 0,623 m Equ./g (entsprechend 52 Mol-% Aminoethylaminopropylendgruppen, Summe x+y = 1,04) werden mit je 28 g Isotridecanol und Ethanol verdünnt und auf 50°C erwärmt. Nach Zugabe von 13,5 g Gluconolacton wird die stark trübe Mischung auf 80°C erwärmt. Nach 145 Minuten erhält man eine klare Lösung, die man weitere 3 Stunden ausreagieren lässt. Ethanol wird im Vakuum bei 60°C entfernt. Die resultierende 90 %-ige Polyhydroxyamidosiloxanlösung hat bei 25°C eine Viskosität von 19200 mm²/s und einen Gehalt an sekundären Aminogruppen von 0,266 m Equ./g.

### Vergleichsbeispiel 2 gemäß US 6,958,410 B2:

Die 240 g des linearen Organopolysiloxans aus Beispiel 3 werden ersetzt durch ein Aminöl bestehend aus Aminoethylaminopropylmethylsiloxan- und Dimethylsiloxaneinheiten mit Methoxy- und Hydroxyendgruppen, einem N-Gehalt von 0,6 % und einer Viskosität von 3180 mPa·s bei 25°C, das nur seitenständige Aminogruppen aufweist. Ein gleichwertiges Organopolysiloxan wird in allen Ausführungsbeispielen der US 6958410 B2 eingesetzt. Zusammen mit je 27,7 g Isotridecanol und Ethanol wird das Siloxan auf 50°C erwärmt. Es werden 9,2 g Gluconolacton eingerührt, was der stöchiometrischen Menge der prim. Aminogruppen entspricht, und 6 Stunden auf 80°C erwärmt. Die Entfernung des Ethanols bei 60°C im Vakuum ergibt nach Abkühlung auf 25°C eine schwach trübe feste Masse, obwohl der N-Gehalt des Edukts und damit auch die Hydroxykonzentration im Umsatzprodukt nur ca. 70 % des Organopolysiloxans aus dem erfindungsgemäßen Beispiel 3 beträgt.

Während das erfindungsgemäße Polyhydroxyamidogruppen aufweisende Organopolysiloxan eine gut fließfähige Flüssigkeit ist, ist das gemäß US 6958410 B2 erhaltene Organopolysiloxan mit nur seitenständigen Polyhydroxyamidogruppen fest.

## Patentansprüche

1. Polyhydroxyamidogruppen aufweisende Organopolysiloxane der allgemeinen Formel
AₓR₃-xSiO(SiR₂O)ₘSiR_{3-y}A_{y} (I),
wobei
A einen einwertigen Rest der allgemeinen Formel
-R¹-N(R²)-Z (IIa) und/oder -R¹-NR³-R⁴-N(R²)-Z (IIb)
bedeutet,
Z ein einwertiger organischer Rest ist, der mit mindestens 2 Hydroxygruppen, vorzugsweise mit mindestens 3 Hydroxygruppen, substituiert ist,
R einen einwertigen gegebenenfalls halogenierten Kohlenwasserstoffrest mit 1 bis 18 C-Atomen bedeutet,
R¹ einen zweiwertigen organischen Rest mit 1 bis 100 C- Atomen, der ein oder mehrere separate Sauerstoffatome enthalten kann, bedeutet,
R² ein Wasserstoffatom oder einen einwertigen Kohlenwasserstoffrest mit 1 bis 18 C-Atomen bedeutet,
R³ ein Wasserstoffatom oder Z bedeutet,
R⁴ ein zweiwertiger Kohlenwasserstoffrest mit 1 bis 6 Kohlenstoffatomen bedeutet, und
m eine ganze Zahl von 1 bis 500 ist,
x 0 oder 1 ist,
y 0 oder 1 ist,
mit der Maßgabe, dass die Summe x+y durchschnittlich 0,4 bis 1,8 ist, und somit als Endgruppen durchschnittlich 20 bis 90 Mol-% Reste A vorliegen.

2. Polyhydroxyamidogruppen aufweisende Organopolysiloxane nach Anspruch 1, **dadurch gekennzeichnet, dass** Z ein Rest ist, der abgeleitet ist von Hydroxycarbonsäuren oder oxidierten Mono- oder Disacchariden, die mindestens 2 Hydroxygruppen enthalten.

3. Polyhydroxyamidogruppen aufweisende Organopolysiloxane nach Anspruch 1 oder 2, **dadurch gekennzeichnet, dass** Z ein Rest ausgewählt aus der Gruppe der Formeln
HOCH₂-(CHOH)_{d}-CO-
O=CH-(CHOH)_{d}-CO-
HO₂C-(CHOH)_{d}-CO-
ist, wobei d 2, 3, 4, 5, 6, 7, 8, 9 und 10 ist.

4. Polyhydroxyamidogruppen aufweisende Organopolysiloxane nach Anspruch 1, 2 oder 3, **dadurch gekennzeichnet, dass** Lösungen in organischen Lösungsmitteln, die 70 bis 95 Gew.-% Polyhydroxyamidogruppen aufweisende Organopolysiloxane enthalten, eine Viskosität von 1000 bis 200000 mPa·s bei 25°C aufweisen.

5. Verfahren zur Herstellung von Polyhydroxyamidogruppen aufweisenden Organopolysiloxane indem
Aminogruppen aufweisende Organopolysiloxane (1) der allgemeinen Formel
BₓR₃₋ₓSiO(SiR₂O)ₘSiR_{3-y}B_{y} (III),
wobei
B einen einwertigen Rest der allgemeinen Formel -R¹-NH(R²) (IVa) und/oder -R¹-NH-R⁴-NH(R²) (IVb) bedeutet, und
R, R, R², R⁴, m, x und y die oben dafür angegebene Bedeutung haben,
mit der Maßgabe, dass die Summe x+y durchschnittlich 0,4 bis 1,8 ist, und somit als Endgruppen durchschnittlich 20 bis 90 Mol-% Reste B vorliegen,
mit Lactonen (2) von Hydroxycarbonsäuren, die mindestens 2 Hydroxygruppen, vorzugsweise mindestens 3 Hydroxygruppen, enthalten,
umgesetzt werden.

6. Verfahren nach Anspruch 5, **dadurch gekennzeichnet, dass** der Rest B ein Aminopropyl-, Aminoisobutyl-, Aminoethylaminopropyl- oder Aminoethylaminoisobutylrest ist.

7. Verfahren nach Anspruch 5 oder 6, **dadurch gekennzeichnet, dass** als Lacton (2) solches ausgewählt aus der Gruppe von Glucarsäure-1,4-lacton, Glucono-1,5-lacton, Glucurono-6,3-lacton, Galactono-1,4-lacton, Mannonsäure-1,4-lacton, Gulonsäure-1,4-lacton, Ascorbinsäure und Glucoascorbinsäure eingesetzt wird.

8. Verfahren nach Anspruch 5, 6 oder 7, **dadurch gekennzeichnet, dass** die Umsetzung in Gegenwart von organischen Lösungsmitteln durchgeführt wird.

## Claims

1. Polyhydroxyamido-containing organopolysiloxanes of the general formula
AₓR₃₋ₓSiO(SiR₂O)ₘSiR_{3-y}A_{y} (I)
where
A represents a monovalent radical of the general formula
-R¹-N(R²)-Z (IIa) and/or -R¹-NR³-R⁴-N(R²)-Z (IIb),
Z is a monovalent organic radical which is substituted with 2 or more hydroxyl groups, preferably with 3 or more hydroxyl groups,
R represents a monovalent, optionally halogenated hydrocarbon radical having 1 to 18 carbon atoms,
R¹ represents a divalent organic radical having 1 to 100 carbon atoms which may contain one or more separate oxygen atoms,
R² represents a hydrogen atom or a monovalent hydrocarbon radical having 1 to 18 carbon atoms,
R³ represents a hydrogen atom or Z,
R⁴ represents a divalent hydrocarbon radical having 1 to 6 carbon atoms,
m is an integer from 1 to 500,
x is 0 or 1,
y is 0 or 1,
with the proviso that the sum x+y is on average 0.4 to 1.8 and thus there are an average of 20 to 90 mol% of the A radicals present as end groups.

2. Polyhydroxyamido-containing organopolysiloxanes according to Claim 1, **characterized in that** Z is a radical derived from hydroxy carboxylic acids or oxidized mono- or disaccharides that contain 2 or more hydroxyl groups.

3. Polyhydroxyamido-containing organopolysiloxanes according to Claim 1 or 2, **characterized in that** Z is a radical selected from the group consisting of the formulae
HOCH₂-(CHOH)_{d}-CO-
O=CH-(CHOH)_{d}-CO-
HO₂C-(CHOH)_{d}-CO-
where d is 2, 3, 4, 5, 6, 7, 8, 9 and 10.

4. Polyhydroxyamido-containing organopolysiloxanes according to Claim 1, 2 or 3, **characterized in that** solutions in organic solvents that contain 70% to 95% by weight of polyhydroxyamido-containing organopolysiloxanes have a viscosity of 1000 to 200 000 mPa·s at 25°C.

5. Process for preparing polyhydroxyamido-containing organopolysiloxanes, which comprises reacting amino-containing organopolysiloxanes (1) of the general formula
BₓR₃₋ₓSiO(SiR₂O)ₘSiR_{3-y}B_{y} (III)
where
B represents a monovalent radical of the general formula
-R¹-NH(R²) (IVa) and/or -R¹-NH-R⁴-NH(R²) (IVb)
and
R, R¹, R², R⁴, m, x and y are each as defined above,
with the proviso that the sum x+y is on average 0.4 to 1.8 and thus an average of 20 to 90 mol% of the B radicals are present as end groups,
with lactones (2) of hydroxy carboxylic acids that contain 2 or more hydroxyl groups, preferably 3 or more hydroxyl groups.

6. Process according to Claim 5, **characterized in that** the B radical is an aminopropyl, aminoisobutyl, aminoethylaminopropyl or aminoethylaminoisobutyl radical.

7. Process according to Claim 5 or 6, **characterized in that** the lactone (2) is selected from the group consisting of glucaro-1,4-lactone, glucono-1,5-lactone, glucurono-6,3-lactone, galactono-1,4-lactone, mannono-1,4-lactone, gulono-1,4-lactone, ascorbic acid and glucoascorbic acid.

8. Process according to Claim 5, 6 or 7, **characterized in that** the reacting is effected in the presence of organic solvents.

## Revendications

1. Organopolysiloxanes présentant des groupes polyhydroxyamido de formule générale
AₓR₃₋ₓSiO(SiR₂O)ₘSiR_{3-y}A_{y} (I),
où
A signifie un radical monovalent de formule générale
-R¹-N(R²)-Z (IIa) et/ou -R¹-NR³-R⁴-N(R²)-Z (IIb)
Z représente un radical organique monovalent, qui est substitué par au moins 2 groupes hydroxy, de préférence par au moins 3 groupes hydroxy,
R signifie un radical hydrocarboné monovalent le cas échéant halogéné, comprenant 1 à 18 atomes de carbone,
R¹ signifie un radical organique divalent, comprenant 1 à 100 atomes de carbone, qui peut contenir un ou plusieurs atomes d'oxygène séparés,
R² signifie un atome d'hydrogène ou un radical hydrocarboné monovalent comprenant 1 à 18 atomes de carbone,
R³ signifie un atome d'hydrogène ou Z,
R⁴ signifie un radical hydrocarboné divalent comprenant 1 à 6 atomes de carbone et
m vaut un nombre entier de 1 à 500,
x vaut 0 ou 1,
y vaut 0 ou 1,
à condition que la somme x + y vaille en moyenne 0,4 à 1,8 et qu'il existe donc, comme groupes terminaux, en moyenne 20 à 90% en mole de radicaux A.

2. Organopolysiloxanes présentant des groupes polyhydroxyamido selon la revendication 1, **caractérisés en ce que** Z représente un radical qui est dérivé d'acides hydroxycarboxyliques ou de monosaccharides ou de disaccharides oxydés qui contiennent au moins 2 groupes hydroxy.

3. Organopolysiloxanes présentant des groupes polyhydroxyamido selon la revendication 1 ou 2, **caractérisés en ce que** Z représente un radical choisi dans le groupe des formules
HOCH₂-(CHOH)_{d}-CO-
O=CH-(CHOH)_{d}-CO-
HO₂C-(CHOH)_{d}-CO-
où d vaut 2, 3, 4, 5, 6, 7, 8, 9 et 10.

4. Organopolysiloxanes présentant des groupes polyhydroxyamido selon la revendication 1, 2 ou 3, **caractérisés en ce que** des solutions dans des solvants organiques, qui contiennent 70 à 95% en poids d'organopolysiloxanes présentant des groupes polyhydroxyamido, présentent une viscosité de 1000 à 200 000 mPa.s à 25°C.

5. Procédé pour la préparation d'organopolysiloxanes présentant des groupes polyhydroxyamido dans lequel on transforme des organopolysiloxanes (1) présentant des groupes amino de formule générale
BₓR₃₋ₓSiO(SiR₂O)ₘSiR_{3-y}B_{y} (III),
où
B signifie un radical monovalent de formule générale
-R¹-NH(R²) (IVa) et/ou -R¹-NH-R⁴-NH(R²) (IVb)
et
R, R¹, R², R⁴, m, x et y ont la signification indiquée ci-dessus,
à condition que la somme x + y vaille en moyenne 0,4 à 1,8 et qu'il existe donc, comme groupes terminaux, en moyenne 20 à 90% en mole de radicaux B,
avec des lactones (2) d'acides hydroxycarboxyliques qui contiennent au moins 2 groupes hydroxy, de préférence au moins 3 groupes hydroxy.

6. Procédé selon la revendication 5, **caractérisé en ce que** le radical B est un radical aminopropyle, amino-isobutyle, aminoéthylaminopropyle ou aminoéthylamino-isobutyle.

7. Procédé selon la revendication 5 ou 6, **caractérisé en ce qu'**on utilise comme lactone (2) une lactone choisie dans le groupe constitué par la 1,4-lactone de l'acide glucarique, la glucono-1,5-lactone, la glucurono-6,3-lactone, la galactono-1,4-lactone, la 1,4-lactone de l'acide mannonique, la 1,4-lactone de l'acide gulonique, l'acide ascorbique et l'acide glucoascorbique.

8. Procédé selon la revendication 5, 6 ou 7, **caractérisé en ce que** la transformation est réalisée en présence de solvants organiques.
